# DEMANDE DE BREVET EUROPEEN

(11) **EP 1 440 992 A1**
(43) Date de publication de la demande: **28.07.2004**
(21) Numéro de dépôt: 03290134.0
(22) Date de dépôt: 21.01.2003
(51) Int. Cl.: C08G 63/06, C08G 63/78, C08G 63/87

(54) **Système catalytique de (co)polymérisation du lactide et du glycolide**

(71) Demandeur: Société de Conseils de Recherches et d'Applications Scientifiques ( S.C.R.A.S.), 75016 Paris (FR); CENTRE NATIONAL DE LA RECHERCHE SCIENTIFIQUE (CNRS), 75794 Paris Cedex 16 (FR)
(72) Inventeur: Martin-Vaca, Blanca, 31400 Toulouse (FR); Dumitrescu, Anca, 31300 Toulouse (FR); Vranicar, Lidija, 31400 Toulouse (FR); Cazaux, Jean-Bernard, 30390 Aramon (FR); Bourissou, Didier, 31830 Plaisance du touch (FR)
(74) Mandataire: Bourgouin, André

(57) **Abrégé**

La présente invention concerne un système catalytique de (co)polymérisation du lactide et du glycolide, ledit système constitué d'un trifluorométhanesulfonate comme catalyseur et d'un additif de (co)polymérisation. La présente invention concerne également un procédé de (co)polymérisation du lactide et du glycolide comprenant l'utilisation d'un tel système catalytique.

## Description

La présente invention concerne un système catalytique de (co)polymérisation du lactide et du glycolide, ledit système constitué d'un trifluorométhanesulfonate comme catalyseur et d'un additif de (co)polymérisation. La présente invention concerne également un procédé de (co)polymérisation du lactide et du glycolide comprenant l'utilisation d'un tel système catalytique.

De nos jours, une attention croissante est portée aux polymères synthétiques pour l'élaboration d'organes artificiels et la formulation de médicaments [*Chem. Eng. News* **2001,** *79* (6), 30]. Les polymères concernés doivent respecter un certain nombre de critères et, en particulier, ils doivent être biocompatibles. Le caractère biodégradable est un avantage supplémentaire si le polymère doit être éliminé après une période appropriée d'implantation dans un organisme. A cet égard, les copolymères à base d'acide lactique et glycolique (PLGA) présentent un très grand intérêt car ils sont sensibles à l'hydrolyse et sont dégradés *in vivo* avec libération de sous-produits non-toxiques. Le champ d'application des PLGA est très vaste (*Adv. Mater.* **1996,** *8*, 305 et *Chemosphere* **2001,** *43,* 49). Dans le domaine chirurgical, ils sont utilisés pour la synthèse de fils multi-brins, de sutures, d'implants, de prothèses... En pharmacologie, ils permettent l'encapsulation, le transfert et la libération contrôlée de principes actifs.

Pour toutes ces applications, le facteur clé est la vitesse de dégradation des PLGA qui dépend bien sûr de leur structure (longueur de chaîne, dispersité, proportion, stéréochimie et enchaînement des monomères...). Ces dernières années, de nombreux travaux ont donc été consacrés à la mise au point de catalyseurs et/ou amorceurs de (co)polymérisation, c'est-à-dire de polymérisation ou de copolymérisation, du lactide et du glycolide permettant de préparer des PLGA de structure contrôlée.

L'utilisation de systèmes métalliques conduit le plus souvent à une contamination des copolymères ainsi obtenus par la présence de sels métalliques, ce qui constitue parfois une limitation importante selon les applications envisagées. La mise au point de systèmes non-métalliques permettant la (co)polymérisation contrôlée du lactide et du glycolide constitue donc un enjeu majeur.

La déposante propose donc un système catalytique simple, constitué d'un catalyseur et d'un additif de (co)polymérisation, et qui permet de contrôler la longueur de chaîne mais également la nature des extrémités de chaîne des (co)polymères préparés.

La présente invention a donc pour objet un système catalytique constitué
(a) d'un trifluorométhanesulfonate de formule générale (1) 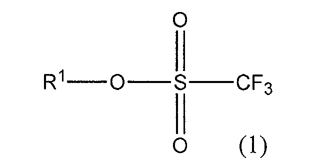 dans laquelle
   R¹ représente un atome d'hydrogène ou de deutérium, ou un groupe de formule -E₁₄(R₁₄)(R'₁₄)(R"₁₄);
   E₁₄ est un élément du groupe 14 ;
   R₁₄, R'₁₄ et R"₁₄ représentent, indépendamment, l'atome d'hydrogène, de deutérium ou l'un des radicaux substitués ou non-substitués suivants : alkyle, cycloalkyle ou aryle, et dans lesquels le ou lesdits substituants sont choisis parmi : halo, alkyle, cycloalkyle et aryle,
   en tant que catalyseur, et
(b) d'un additif de (co)polymérisation de formule générale (2)

   R²― E― R³ (2)

   dans laquelle
   E représente un élément du groupe 16 ;
   R² représente un atome d'hydrogène ou de deutérium ;
   R³ représente un atome d'hydrogène ou de deutérium, ou un groupe de formule -E'₁₄(T₁₄)(T'₁₄)(T"₁₄);
   E'₁₄ est un élément du groupe 14 ;
   T₁₄, T'₁₄ et T"₁₄ représentent, indépendamment, l'atome d'hydrogène ; l'atome de deutérium ; l'un des radicaux substitués ou non-substitués suivants : alkyle, cycloalkyle ou aryle, et dans lesquels le ou lesdits substituants sont choisis parmi : halo, hydroxy, alkyle, alkoxy, cycloalkyle, cycloalkoxy, aryle, aryloxy, carboxy, alkoxycarbonyle, cycloalkoxycarbonyle et aryloxycarbonyle,
   pour la (co)polymérisation du lactide et du glycolide.

L'expression halo signifie fluoro, chloro, bromo ou iodo, et de préférence chloro. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle. Le terme alkoxy désigne les radicaux dans lesquels le radical alkyle est tel que défini ci-dessus comme par exemple les radicaux méthoxy, éthoxy, propyloxy ou isopropyloxy mais également butoxy linéaire, secondaire ou tertiaire, pentyloxy. Le terme alkoxycarbonyle désigne de préférence les radicaux dans lesquels le radical alkoxy est tel que défini ci-dessus comme par exemple méthoxycarbonyle, éthoxycarbonyle.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène. Le terme cycloalkoxy désigne les radicaux dans lesquels le radical cycloalkyle est tel que défini ci-dessus comme par exemple les radicaux cyclopropyloxy, cyclobutyloxy, cyclopentyloxy, cyclohexyloxy, cycloheptyloxy, cyclobutènyloxy, cyclopentènyloxy, cyclohexènyloxy, cyclopentadiènyloxy, cyclohexadiènyloxy. Le terme cycloalkoxycarbonyle désigne les radicaux dans lesquels le radical cycloalkoxy est tel que défini ci-dessus comme par exemple les radicaux cyclopropyloxycarbonyle, cyclobutyloxycarbonyle, cyclopentyloxycarbonyle, cyclohexyloxycarbonyle, cycloheptyloxycarbonyle, cyclobutènyloxycarbonyle, cyclopentènyloxycarbonyle, cyclohexènyloxycarbonyle.

Les radicaux aryles peuvent être de type mono ou polycycliques. Les radicaux aryles monocycliques peuvent être choisis parmi les radicaux phényle optionnellement substitué par un ou plusieurs radicaux alkyle tel que tolyle, xylyle, mésityle, cuményle. Les radicaux aryles polycycliques peuvent être choisis parmi les radicaux naphtyle, anthryle, phénanthryle. Le terme aryloxy désigne les radicaux dans lesquels le radical aryle est tel que défini ci-dessus comme par exemple les radicaux phényloxy, tolyloxy, naphtyloxy, anthryloxy et phénanthryloxy. Le terme aryloxycarbonyle désigne de préférence les radicaux dans lesquels le radical aryloxy est tel que défini ci-dessus, comme par exemple phényloxycarbonyle, tolyloxycarbonyle.

Dans la présente demande, le terme (co)polymérisation signifie polymérisation ou copolymérisation. Ainsi la (co)polymérisation du lactide et du glycolide couvre la polymérisation du lactide, la polymérisation du glycolide mais également la copolymérisation du lactide et du glycolide.

De préférence, dans un système catalytique selon la présente invention, la quantité de l'additif de (co)polymérisation par rapport au catalyseur est comprise entre 0,05 et 5 équivalents molaire et, de manière très préférentielle, entre 0,5 et 2 équivalents molaire.

L'invention a plus particulièrement pour objet un système catalytique tel que défini ci-dessus, avec le composé de formule (1) dans laquelle R¹ représente soit un atome d'hydrogène soit un groupe de formule -E₁₄(R₁₄)(R'₁₄)(R"₁₄).

Lorsque R¹ représente l'atome d'hydrogène, le composé (1) représente l'acide trifluorométhanesulfonique. Lorsque R¹ représente un groupe de formule -E₁₄(R₁₄)(R'₁₄)(R"₁₄), E₁₄ est de préférence un atome de carbone ou de silicium, et de manière très préférentielle E₁₄ est un atome de carbone et R₁₄, R'₁₄ et R"₁₄ représentent, indépendamment, un atome d'hydrogène ou un radical alkyle.

Selon la présente invention, l'additif de (co)polymérisation de formule (2) ainsi utilisé joue le rôle d'initiateur (ou de co-amorceur) de la (co)polymérisation. Sa présence est indispensable car en l'absence d'un tel composé de formule (2), les réactions de (co)polymérisation sont beaucoup plus lentes, conduisent à des rendements beaucoup plus faibles, ne sont pas reproductibles, et ne sont donc pas exploitables industriellement.

L'invention a plus particulièrement pour objet un système catalytique tel que défini ci-dessus, avec le composé de formule générale (2) dans laquelle
E représente un atome d'oxygène ou de soufre ;
R² représente un atome d'hydrogène ;
R³ représente un atome d'hydrogène ou un groupe de formule -E₁₄(T₁₄)(T'₁₄)(T"₁₄);
E'₁₄ est un atome de carbone ou de silicium ;
T₁₄, T'₁₄ et T"₁₄ représentent, indépendamment, l'atome d'hydrogène, ou l'un des radicaux substitués ou non-substitués suivants : alkyle, cycloalkyle ou aryle, dans lesquels le ou lesdits substituants sont choisis parmi : halo, alkyle, cycloalkyle, phényle, naphtyle, carboxy et alkoxycarbonyle,
et plus particulièrement,
E représente un atome d'oxygène ;
R² un atome d'hydrogène ;
R³ un atome d'hydrogène ou un groupe de formule ―E'₁₄(T₁₄)(T'₁₄₎(T"₁₄) dans laquelle E'₁₄ représente un atome de carbone et T₁₄, T'₁₄ et T"₁₄ représentent, indépendamment, l'atome d'hydrogène ou un radical alkyle.

L'invention a plus particulièrement pour objet un système catalytique tel que défini ci-dessus et caractérisé en ce que l'additif de (co)polymérisation de formule générale (2) est l'eau ou un alcool aliphatique tel que le méthanol, l'éthanol, le propanol, l'isopropanol.

L'invention a également pour objet un procédé de (co)polymérisation du lactide et du glycolide qui consiste à mettre en présence le ou les monomères considérés, un système catalytique tel que défini ci-dessus constitué d'un composé de formule générale (1) et d'un additif de (co)polymérisation de formule générale (2), et éventuellement un solvant de polymérisation.

La (co)polymérisation peut s'effectuer soit en solution soit en surfusion. Lorsque la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures aromatiques (tels que le toluène, un xylène ou le mésitylène), éventuellement substitués par un ou plusieurs groupements nitro (tel que le nitrobenzène), les éthers (tels que le méthyl*tertio*butyléther, le tétrahydrofurane ou le dioxane), les halogénures aliphatiques ou aromatiques (tels que le dichlorométhane, le chloroforme, le dichloroéthane ou un dichlorobenzène).

Selon le procédé de la présente demande, les réactions sont conduites à des températures comprises entre -20°C et environ 150°C. Dans le cas où la (co)polymérisation s'effectue en solution, la température est de préférence comprise entre 0°C et 30°C. Les durées de réaction sont comprises entre quelques minutes et 48 heures, et de préférence entre 30 minutes et 20 heures. La quantité de l'additif de (co)polymérisation par rapport au catalyseur est de préférence comprise entre 0,05 et 5 équivalents molaire et, de manière très préférentielle, entre 0,5 et 2 équivalents molaire. Le rendement d'un procédé de (co)polymérisation selon la présente invention est en général supérieur à 80% et peut même atteindre les 100% dans des conditions relativement douces (température ambiante, quelques heures) comme illustré dans les exemples.

L'invention a plus particulièrement pour objet également un procédé tel que défini ci-dessus, avec un système catalytique tel que défini ci-dessus et le composé de formule (1) dans laquelle R¹ représente soit un atome d'hydrogène soit un groupe de formule -E₁₄(R₁₄)(R'₁₄)(R"₁₄).

Lorsque R¹ représente l'atome d'hydrogène, le composé (1) représente l'acide trifluorométhanesulfonique. Lorsque R¹ représente un groupe de formule -E₁₄(R₁₄)(R'₁₄)(R"₁₄), E₁₄ est de préférence un atome de carbone ou de silicium, et de manière très préférentielle E₁₄ est un atome de carbone et R₁₄, R'₁₄, R"₁₄ représentent un atome d'hydrogène ou un radical alkyle.

L'invention a plus particulièrement pour objet également un procédé de (co)polymérisation tel que défini ci-dessus, avec un système catalytique tel que défini ci-dessus et le composé de formule générale (2) dans laquelle
E représente un atome d'oxygène ou de soufre ;
R² représente un atome d'hydrogène ;
R³ représente un atome d'hydrogène ou un groupe de formule ―E₁₄(T₁₄)(T'₁₄)(T"₁₄);
E'₁₄ est un atome de carbone ou de silicium ;
T₁₄, T'₁₄ et T"₁₄ représentent, indépendamment, l'atome d'hydrogène, ou l'un des radicaux substitués ou non-substitués suivants : alkyle, cycloalkyle ou aryle, dans lesquels le ou lesdits substituants sont choisis parmi : halo, alkyle, cycloalkyle, phényle, naphtyle, carboxy et alkoxycarbonyle,
et plus particulièrement,
E représente un atome d'oxygène ;
R² un atome d'hydrogène ;
R³ un atome d'hydrogène ou un groupe de formule -E'₁₄(T₁₄)(T'₁₄)(T"₁₄) dans laquelle E'₁₄ représente un atome de carbone et T₁₄, T'₁₄ et T"₁₄ représentent, indépendamment, l'atome d'hydrogène ou un radical alkyle.

L'invention a plus particulièrement pour objet un procédé de (co)polymérisation du lactide et du glycolide tel que défini ci-dessus, avec un système catalytique dont l'additif de (co)polymérisation est l'eau ou un alcool aliphatique, et de préférence le méthanol, l'éthanol, le propanol, l'isopropanol.

Le procédé de (co)polymérisation du lactide et du glycolide selon la présente invention permet donc de contrôler la nature des extrémités de chaîne des (co)polymères et convient particulièrement bien pour l'obtention de (co)polymères d'extrémités acide-alcool ou ester-alcool comme illustré dans la partie expérimentale.

Le procédé de (co)polymérisation du lactide et du glycolide selon la présente invention convient particulièrement bien pour l'obtention de (co)polymères de masse comprise entre 500 et 50 000 Dalton, plus particulièrement entre 1 000 et 20 000 Dalton.

Le procédé de (co)polymérisation du lactide et du glycolide selon la présente invention présente de nombreux avantages, en particulier,
- le système catalytique est constitué d'un catalyseur et d'un additif de (co)polymérisation qui sont facilement accessibles et bon marché ;
- l'utilisation d'un additif comme initiateur de (co)polymérisation permet non seulement d'améliorer très significativement le déroulement de la (co)polymérisation mais également de contrôler précisément la longueur de chaîne qui est pratiquement égale au rapport initial monomère sur initiateur ;
- l'utilisation d'un additif comme initiateur de (co)polymérisation permet également de contrôler la nature des extrémités de chaîne des (co)polymères préparés ;
- la (co)polymérisation peut être effectuée dans des conditions de température particulièrement douces, telles qu'à température ambiante, sans que les temps de réaction nécessaires à une conversion quasi-totale du ou des monomères ne dépassent quelques heures et au maximum 24 heures ;
- la (co)polymérisation peut être véritablement effectuée en milieu homogène de sorte que la distribution de masse des (co)polymères obtenus est étroite ; les indices de polydispersité des (co)polymères obtenus selon la présente invention sont en effet compris entre 1,0 et 1,5 ;
- les (co)polymères obtenus peuvent être facilement, rapidement et efficacement purifiés sans modification de leurs propriétés. Les traces de monomères résiduels ainsi que les résidus de catalyseurs sont en effet éliminés quantitativement par simple filtration sur alumine basique et/ou lavage biphasique avec une solution aqueuse diluée d'hydrogénocarbonate.

L'invention concerne enfin des polymères ou copolymères susceptibles d'être obtenus par la mise en oeuvre d'un procédé tel que décrit ci-dessus.

Les produits de formule générale (1) et (2) sont commerciaux ou peuvent être fabriqués par les méthodes connues de l'homme de métier.

A moins qu'ils ne soient définis d'une autre manière, tous les termes techniques et scientifiques utilisés dans la présente demande ont la même signification que celle couramment comprise par un spécialiste ordinaire du domaine auquel appartient l'invention. De même, toutes les publications, demandes de brevets et toutes autres références mentionnées dans la présente demande, sont incorporées par référence.

Les exemples suivants sont présentés pour illustrer les procédures ci-dessus et ne doivent en aucun cas être considérés comme une limite à la portée de l'invention.

### Exemple 1: Préparation d'un polymère du (D,L-lactide) à extrémités acide-alcool

Dans un tube de Schlenk muni d'un barreau aimanté et purgé sous argon, on introduit successivement 22 g de D,L-lactide (0,153 mol), 150 ml de dichlorométhane, 1,35 ml d'acide trifluorométhanesulfonique (0,0153 mol) et 0,3 ml d'eau (0,0153 mol). Le mélange réactionnel est laissé sous agitation à température ambiante. L'avancement de la polymérisation est contrôlé par RMN du proton. Après trois heures de réaction, la conversion du monomère est de 100%. De l'alumine basique est alors ajouté au mélange réactionnel. Après une heure d'agitation, le milieu est filtré sur fritté et le solvant est éliminé sous pression réduite. Selon une analyse par GPC (Gel Permeation Chromatography) à l'aide d'un étalonnage réalisé à partir de standards de polystyrène (PS) de masses 761 à 400 000, l'échantillon est composé de polymères ayant des masses voisines (Mw = 2600 Dalton, Mw/Mn = 1,48). La nature des extrémités de chaîne acide-alcool est déterminée par spectrométrie de masse (ionisation par électrospray, détection en mode ions positifs, échantillon dissout dans l'acétonitrile avec une trace d'hydroxyde d'ammonium).

### Exemple 2 : Préparation d'un polymère du (D,L-lactide) à extrémités ester-alcool

Dans un tube de Schlenk muni d'un barreau aimanté et purgé sous argon, on introduit successivement 22 g de D,L-lactide (0,153 mol), 150 ml de dichlorométhane, 1,35 ml d'acide trifluorométhanesulfonique (0,0153 mol) et 1,17 ml d'isopropanol (0,0153 mol). Le mélange réactionnel est laissé sous agitation à température ambiante pendant trois heures. De l'alumine basique est alors ajouté au mélange réactionnel. Après une heure d'agitation, le milieu est filtré sur fritté et le solvant est éliminé sous pression réduite. Le polymère est caractérisé par RMN du proton ; la conversion du monomère est de 100%. Selon une analyse par GPC (Gel Permea Chromatography) à l'aide d'un étalonnage réalisé à partir de standards de polystyrène (PS) de masses 761 à 400 000, l'échantillon est composé de polymères ayant des masses voisines (Mw = 2070 Dalton, Mw/Mn = 1,25). La nature des extrémités de chaîne ester-alcool est déterminée par spectrométrie de masse (ionisation par électrospray, détection en mode ions positifs, échantillon dissout dans l'acétonitrile avec une trace d'hydroxyde d'ammonium).

### Exemple 3 : Préparation d'un copolymère (D,L-lactide/glycolide) 75/25 à extrémités ester-alcool

Dans un tube de Schlenk muni d'un barreau aimanté et purgé sous argon, on introduit 16,5 g de D,L-lactide (0,115 mol) et 4,4 g de glycolide (0,038 mol) qu'on dissout dans 150 ml de dichlorométhane. Ensuite on ajoute successivement 1,35 ml d'acide trifluorométhanesulfonique (0,0153 mol) et 1,17 ml d'isopropanol (0,0153 mols). Le mélange réactionnel est laissé sous agitation à température ambiante pendant deux heures. De l'alumine basique est alors ajouté au mélange réactionnel. Après une heure d'agitation, le milieu est filtré sur fritté et le solvant est éliminé sous pression réduite. Le polymère est caractérisé par RMN du proton ; la conversion de chacun des monomères est supérieure à 95%. Le rapport des intégrales des signaux correspondants à la partie polylactide (5,2 ppm) et polyglycolide (4,85 ppm) permet d'évaluer la composition du copolymère à 79% de lactide et 21% de glycolide. Selon une analyse par GPC (Gel Permea Chromatography) à l'aide d'un étalonnage réalisé à partir de standards de polystyrène (PS) de masses 761 à 400 000, l'échantillon est composé de copolymères ayant des masses voisines (Mw = 2100 Dalton, Mw/Mn = 1,34). La nature des extrémités de chaîne est déterminée par spectrométrie de masse (ionisation par électrospray, détection en mode ions positifs, échantillon dissout dans l'acétonitrile avec une trace d'hydroxyde d'ammonium).

### Exemple 4: Préparation d'un polymère du (D,L-lactide) à extrémités ester-alcool

Dans un tube de Schlenk muni d'un barreau aimanté et purgé sous argon, on introduit successivement 22 g de D,L-lactide (0,153 mol), 150 ml de dichlorométhane, 190 µl d'acide trifluorométhanesulfonique (0,002 mol) et 170 µl d'isopropanol (0,002 mol). Le mélange réactionnel est laissé sous agitation à température ambiante pendant dix heures. De l'alumine basique est alors ajouté au mélange réactionnel. Après une heure d'agitation, le milieu est filtré sur fritté et le solvant est éliminé sous pression réduite. Le polymère est caractérisé par RMN du proton ; la conversion du monomère est de 100%. La présence de l'extrémité de chaîne isopropyl ester est également mise en évidence par RMN du proton. Selon une analyse par GPC (Gel Permea Chromatography) à l'aide d'un étalonnage réalisé à partir de standards de polystyrène (PS) de masses 761 à 400 000, l'échantillon est composé de polymères ayant des masses voisines (Mw = 13 000 Dalton, Mw/Mn = 1,15).

## Revendications

1. Système catalytique constitué
(a) d'un trifluorométhanesulfonate de formule générale (1) 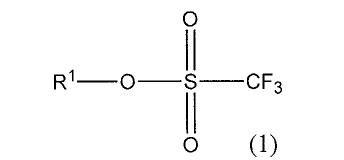 dans laquelle
R¹ représente un atome d'hydrogène ou de deutérium, ou un groupe de formule -E₁₄(R₁₄)(R'₁₄)(R"₁₄);
E₁₄ est un élément du groupe 14 ;
R₁₄, R'₁₄ et R"₁₄ représentent, indépendamment, l'atome d'hydrogène, de deutérium ou l'un des radicaux substitués ou non-substitués suivants : alkyle, cycloalkyle ou aryle, et dans lesquels le ou lesdits substituants sont choisis parmi : halo, alkyle, cycloalkyle et aryle,
en tant que catalyseur, et
(b) d'un additif de (co)polymérisation de formule générale (2)
R²―E―R³ (2)
dans laquelle
E représente un élément du groupe 16 ;
R² représente un atome d'hydrogène ou de deutérium ;
R³ représente un atome d'hydrogène ou de deutérium, ou un groupe de formule -E'₁₄(T₁₄)(T'₁₄)(T"₁₄);
E'₁₄ est un élément du groupe 14 ;
T₁₄, T'₁₄ et T"₁₄ représentent, indépendamment, l'atome d'hydrogène ; l'atome de deutérium ; l'un des radicaux substitués ou non-substitués suivants : alkyle, cycloalkyle ou aryle, et dans lesquels le ou lesdits substituants sont choisis parmi : halo, hydroxy, alkyle, alkoxy, cycloalkyle, cycloalkoxy, aryle, aryloxy, carboxy, alkoxycarbonyle, cycloalkoxycarbonyle et aryloxycarbonyle,
pour la (co)polymérisation du lactide et du glycolide.

2. Système catalytique selon la revendication 1, **caractérisé en ce que** la quantité de l'additif de (co)polymérisation par rapport au catalyseur est comprise entre 0,05 et 5 équivalents molaire et de préférence entre 0,5 et 2 équivalents molaire.

3. Système catalytique selon l'une des revendications précédentes, **caractérisé en ce que** le composé de formule (1) est tel que R¹ représente soit un atome d'hydrogène soit un groupe de formule -E₁₄(R₁₄)(R'₁₄)(R"₁₄).

4. Système catalytique selon la revendication 3, **caractérisé en ce que** R¹ représente l'atome d'hydrogène.

5. Système catalytique selon la revendication 3, **caractérisé en ce que** le composé de formule (1) est tel que R¹ représente un groupe de formule -E₁₄(R₁₄)(R'₁₄)(R"₁₄) et E₁₄ un atome de carbone ou de silicium.

6. Système catalytique selon la revendication 5, **caractérisé en ce que** E₁₄ est un atome de carbone et R₁₄, R'₁₄ et R"₁₄ représentent, indépendamment, un atome d'hydrogène ou un radical alkyle.

7. Système catalytique selon l'une des revendications précédentes, **caractérisé en ce que** le composé de formule générale (2) est tel que
E représente un atome d'oxygène ou de soufre ;
R² représente un atome d'hydrogène ;
R³ représente un atome d'hydrogène ou un groupe de formule ―E'₁₄(T₁₄)(T'₁₄)(T"₁₄);
E'₁₄ est un atome de carbone ou de silicium ;
T₁₄, T'₁₄ et T"₁₄ représentent, indépendamment, l'atome d'hydrogène, ou l'un des radicaux substitués ou non-substitués suivants : alkyle, cycloalkyle ou aryle, dans lesquels le ou lesdits substituants sont choisis parmi : halo, alkyle, cycloalkyle, phényle, naphtyle, carboxy et alkoxycarbonyle.

8. Système catalytique selon la revendication 7, **caractérisé en ce que**
E représente un atome d'oxygène ;
R² un atome d'hydrogène ;
R³ un atome d'hydrogène ou un groupe de formule ―E'₁₄(T₁₄)(T'₁₄)(T"₁₄) dans laquelle E'₁₄ représente un atome de carbone et T₁₄, T'₁₄ et T"₁₄ représentent, indépendamment, l'atome d'hydrogène ou un radical alkyle.

9. Système catalytique selon l'une des revendications précédentes, **caractérisé en ce que** le composé de formule générale (2) est l'eau ou un alcool aliphatique.

10. Procédé de (co)polymérisation du lactide et du glycolide qui consiste à mettre en présence le ou les monomères considérés, un système catalytique tel que défini à l'une des revendications 1 à 9, et éventuellement un solvant de polymérisation.

11. Procédé selon la revendication 10, **caractérisé en ce que** la température est comprise entre -20°C et environ 150°C.

12. Procédé selon la revendication 11, **caractérisé en ce que** le procédé s'effectue en solution à une température comprise entre 0°C et 30°C.

13. Procédé selon l'une des revendications 10 à 12, **caractérisé en ce que** la durée de réaction est comprise entre quelques minutes et 48 heures, et de préférence entre 30 minutes et 20 heures.
